(19) Europäisches Patentamt
European Patent Office
Office européen des brevets

(11) EP 1 004 611 B1

(12) EUROPÄISCHE PATENTSCHRIFT

(45) Veröffentlichungstag und Bekanntmachung des Hinweises auf die Patenterteilung:
**12.02.2003 Patentblatt 2003/07**

(51) Int Cl.[7]: **C08G 69/16**

(21) Anmeldenummer: **99123435.2**

(22) Anmeldetag: **24.11.1999**

(54) **Verfahren zur Herstellung von Polyamid 6 für Spinnzwecke**

Process of preparing polyamide 6 for spinning uses

Procédé de préparation de polyamide 6 pour usage de filage

(84) Benannte Vertragsstaaten:
**DE ES IT NL**

(30) Priorität: **25.11.1998 DE 19854421**

(43) Veröffentlichungstag der Anmeldung:
**31.05.2000 Patentblatt 2000/22**

(73) Patentinhaber: **INVENTA-FISCHER AG**
**8002 Zürich (CH)**

(72) Erfinder:
- **Liedloff, Hans-Joerg, Dr.**
  **7013 Domat/Ems (CH)**
- **Bergmann, Klaus, Dr.**
  **7015 Tamins (CH)**
- **Schmidt, Gerhard, Dr.**
  **7013 Domat/Ems (CH)**
- **Stibal, Werner**
  **7000 Chur (CH)**

(74) Vertreter: **Becker Kurig Straus**
**Patentanwälte**
**Bavariastrasse 7**
**80336 München (DE)**

(56) Entgegenhaltungen:
**EP-A- 0 288 894**
**EP-A- 0 348 821**
**EP-A- 0 818 491**
**WO-A-94/09196**
**DE-A- 19 537 614**
**GB-A- 2 134 123**

- **DATABASE WPI Section Ch, Week 199425 Derwent Publications Ltd., London, GB; Class A17, AN 1994-206554 XP002134103 & JP 06 145345 A (MITSUBISHI KASEI CORP), 24. Mai 1994 (1994-05-24)**
- **PATENT ABSTRACTS OF JAPAN vol. 1995, no. 05, 30. Juni 1995 (1995-06-30) & JP 07 042020 A (TORAY IND INC), 10. Februar 1995 (1995-02-10)**

EP 1 004 611 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft den in den Patentansprüchen angegebenen Gegenstand.

Insbesondere betrifft die Erfindung ein Verfahren zur Herstellung von Polyamid 6 durch hydrolytische Polymerisation von Caprolactam (Ia) oder Polykondensation von ε-Aminocapronsäure (Ib) in Gegenwart der unten näher spezifizierten Komponenten II bis VIII, ferner aus den Komponenten Ia/b bis VIII zugängliches Polyamid 6, in dem die Komponenten II bis VIII über Amidbindungen an die Polymerkette gebunden sind und die Konzentration an primären Aminoendgruppen, die Gesamtkonzentration primärer, sekundärer und tertiärer Aminogruppen und das Produkt aus der primären Amino- und Carboxylendgruppenkonzentration bestimmte obere bzw. untere Werte nicht über- bzw. unterschreitet, sowie die Verwendung dieser Polyamide zur Herstellung von Fäden, wobei darunter Filamente und Stapelfasern zu verstehen sind.

Für die Herstellung von Fäden und deren Weiterverarbeitung zu textilen Endprodukten hat innerhalb der Gruppe der aus Lactamen mit 6 bis 12 C-Atomen oder ω-Aminocarbonsäuren mit 6 bis 12 C-Atomen zugänglichen aliphatischen Polyamide das Polycaprolactam bzw. PA 6 eine überragende wirtschaftliche und technische Bedeutung. Obwohl PA 6 insgesamt eine sehr gute Verarbeitungscharakteristik und gute textile Eigenschaften aufweist, haben Fortschritte in der Spinnereitechnik in jüngster Zeit die Verbesserung dieses Polymeren in Richtung höherer Spinngeschwindigkeiten und verminderter Spinnabfälle notwendig gemacht. Parallel dazu ist aus den spezifischen Anforderungen bestimmter Endanwendungen der Bedarf nach hitze- und lichtstabilem PA 6 entstanden.

Eine Reihe von Patentanmeldungen befaßt sich mit der Lösung der oben skizzierten Problemstellungen. So betrifft die EP 644 959 B1 "schnellgesponnene Fäden auf Basis von Polycaprolactam", wobei die Polymerherstellung in Gegenwart mindestens einer Dicarbonsäure und gegebenenfalls unter Zusatz verschiedener aminofunktioneller Komponenten zur Verbesserung der Anfärbbarkeit gegenüber anionischen Farbstoffen durchgeführt wird. Die aminofunktionellen Komponenten wirken dabei ebenso wie die Dicarbonsäuren als Kettenregler.

DE-PS 44 13 177 sowie die WO 95/28443, welche "inhärent(licht- und) hitzestabilisierte Polyamide" betreffen, schreiben die Herstellung von PA 6 in Gegenwart einer Dicarbonsäure und einer Triacetondiamin-Verbindung wie 4-Amino-2,2,6,6-tetramethylpiperidin vor. Die Triacetondiamin-Verbindung hat dabei drei Funktionen: Sie wirkt als Kettenregler, stellt die Anfärbbarkeit gegenüber anionischen Farbstoffen sicher und verbessert die Hitze-(und Licht-)stabilität des PA 6. In der EP 345 648 B 1 sind auf Lactamen mit 6 bis 12 C-Atomen basierende Polyamide mit definiertem Verzweigungsgrad beschrieben, deren besondere Verzweigungsmuster entweder durch die Mitverwendung einer Tricarbonsäure und eines Diamins oder einer Dicarbonsäure und eines Triamins während der Polymerisation erzeugt werden. Zusätzlich beschreibt EP 345 648 B1 die Verwendung von 4-Amino-2,2,6,6-tetramethylpiperidin und dessen Derivaten als Kettenregler, wobei der Einbau dieser Verbindungen an den Enden der Polyamidketten erfolgt. Weiterhin wird dort beschrieben, daß Triacetondiamin und seine Derivate die Anfärbbarkeit von Fasern mit sauren, d.h. anionischen Farbstoffen verbessern.

DE 195 37 614 C2, "Polycaprolactam mit neuartiger Kettenregelung", betrifft die Polymerisation von Caprolactam zusammen mit einer aromatischen Dicarbonsäure, einem aliphatischen oder cycloaliphatischen Diamin, das eine primäre und eine tertiäre Aminogruppe trägt, und einem 4-Amino-2,2,6,6,-tetraalkylpiperidin.

Auf witterungsstabile Polyamide und Verfahren zu deren Herstellung zielt die DE 197 22 135 A1 ab. Erreicht wird die Witterungsstabilität dabei durch Polykondensation der polyamidbildenden Komponenten in Gegenwart eines 4-Amino-2,2,6,6-tetraalkylpiperidins und eines in 4-Stellung zur OH-Gruppe funktionalisierten 2,6-Dialkylphenols, dessen zweite funktionelle Gruppe eine Carboxylgruppe oder eine primäre Aminogruppe ist. In einer weiteren Ausführungsform beschreibt DE 197 22 135 A1 aus Lactamen oder ω-Aminocarbonsäuren zugängliche Polyamide, die neben den anderen Kettenreglern auch Tri- oder Tetracarbonsäuren enthalten.

Die hitze- und/oder lichtstabilisierende Wirkung der oben genannten, in 4-Stellung zur OH-Gruppe funktionalisierten 2,6-Dialkylphenole auf Polyamide ist in der FR-PS 155 350, der DE-OS 22 37 849 und in der JP 4 159 327 beschrieben.

Von den oben aufgeführten Dokumenten erlauben DE-OS 44 13 177, DE 195 37 614 C2 und DE 197 22 135 A1 die Herstellung von Polyamid 6, das sich für das Schnellspinnen eignet und gleichzeitig eine verbesserte Hitze-, Licht- und Witterungsstabilität neben guter Anfärbbarkeit gegenüber sauren Farbstoffen aufweist. Die erreichbaren Wickel- bzw. Spinngeschwindigkeiten von 5000 bis 6000 m/min und die hohe Spinnsicherheit in diesem Geschwindigkeitsbereich heben den Nachteil der vergleichsweise hohen Rohstoffkosten dieser Produkte bei weitem auf und machen ihre kommerzielle Verwendung wirtschaftlich.

In der EP 644 959 B1, der DE-PS 44 13 177 und in der WO 95/28 443 wird ein Zusammenhang zwischen der Spinnbarkeit des Polyamid 6 und der Art des bei der Caprolactam-Polymerisation verwendeten Kettenreglers hergestellt.

Insbesondere die EP 644 959 B1 weist für das in Gegenwart von Dicarbonsäuren als Kettenregler hergestellte Polyamid 6 hohe Spinngeschwindigkeiten, hohe Spinnsicherheit und eine geringe Fehlerrate bei der Weiterverarbeitung der Fäden aus. Anhand entsprechender Vergleichsversuche zeigt die EP 644 959 B1 ferner, daß durch Regelung

von Polyamid 6 mit Monocarbonsäuren kein so günstiges Ergebnis in bezug auf dessen Verarbeitungseigenschaften zu erzielen sei wie mit Dicarbonsäuren. Die gute Spinnbarkeit der mit Dicarbonsäuren modifizierten PA 6-Typen führt die EP 644 595 B1 auf die vergleichsweise niedrige elastische Nachgiebigkeit

$$J_e = G'/(G'')^2$$

der betreffenden Polymerschmelzen zurück. (G': Speichermodul; G": Verlustmodul). Legt man die Daten der Beispiele 1 und 2 der EP 644 595 B1 zugrunde, so nimmt bei Dicarbonsäure-geregeltem Polyamid 6 $J_e$ mit steigender relativer Viskosität zu. Dieser qualitative Zusammenhang zwischen $J_e$ und relativer Viskosität bzw. Molekulargewicht ist offensichtlich die Grundlage für die in der EP 644 595 B1 angegebene zahlenmäßige Beziehung zwischen der Fadenviskosität und der Mindestabzugsgeschwindigkeit (= Spinngeschwindigkeit). Folgerichtig ist nach dieser Beziehung die Mindestabzugsgeschwindigkeit umso höher, je niedriger die Fadenviskosität und damit auch die Viskosität des verarbeitungsfertigen Polyamid 6 ist. Die technische Lehre der EP 644 595 B1 in bezug auf die Beschaffenheit von Polyamid 6 für das Schnellspinnen läßt sich also kurz so zusammenfassen, daß Dicarbonsäureregelung und nicht zu hohe Fadenviskositäten zu bevorzugen sind und Monocarbonsäureregelung zu vermeiden ist.

Die Aufgabe der vorliegenden Erfindung besteht nun darin, ganz oder teilweise mit Monocarbonsäuren geregeltes Polyamid 6 bereitzustellen, welches für das Schnellspinnen geeignet ist.

Diese Aufgabe wird durch das Verfahren gemäß Anspruch 1 bzw. durch das Polyamid 6 nach Anspruch 6 sowie dessen Verwendung nach Anspruch 7 gelöst.

Überraschenderweise und entgegen allen aus dem Stand der Technik ableitbaren Vorhersagen, die eher das Gegenteil erwarten ließen, gelang die Lösung dieser Aufgabe durch den vor Beginn oder während der Polymerisation bzw. Polykondensation erfolgten Zusatz einer Monocarbonsäure (II) neben gegebenenfalls Dicarbonsäuren (III) sowie gegebenenfalls den weiteren Komponenten (IV) bis (VIII), wobei von den Komponenten (IV) bis (VI) mindestens eine bei der Polymerisation bzw. Polykondensation vorhanden ist, so daß für das verarbeitungsfertige, das heißt extrahierte und getrocknete Polyamid 6

- die Konzentration der primären Aminoendgruppen ($-NH_2$) höchstens 34 meq/kg,
- die Gesamtkonzentration der aus den Komponenten (IV) bis (VI) stammenden sekundären und tertiären Aminogruppen wenigstens 4 meq/kg und
- das Produkt aus der $NH_2$- und Carboxylendgruppenkonzentration ($[NH_2]\cdot[COOH]$) höchstens 2000 $(meq/kg)^2$ beträgt.

Dabei ist die Komponente (IV) ein 4-Amino-2,2,6,6-tetraalkylpiperidin, Komponente (V) ein aliphatisches oder cycloaliphatisches Diamin, welches eine primäre und eine tertiäre Aminogruppe trägt, Komponente (VI) ein α-Dialkylaminocaprolactam, Komponente (VII) ein Dialkylphenol und Komponente (VIII) ein aliphatisches oder cycloaliphatisches oder araliphatisches, verzweigtes oder geradkettiges C6- bis $C_{12}$-Monoamin.

Die Erfindung betrifft daher ein Verfahren zur Herstellung von Polyamid 6, das durch hydrolytische Polymerisation von Caprolactam (Ia) oder Polykondensation von ε-Aminocapronsäure (Ib) zugänglich ist, wobei die Polymerisation bzw. Polykondensation in Gegenwart von

- 0,05 bis 0,7 Gew.-% Monocarbonsäure (II),

- 0 bis 0,7 Gew.-% Dicarbonsäure (III)

- 0 bis 0,7 Gew.-% 4-Amino-2,2,6,6-tetraalkylpiperidin (IV),

- 0 bis 0,5 Gew.-% eines aliphatischen oder cyclophatischen Diamins (V), welches eine primäre und eine tertiäre Aminogruppe trägt,

- 0 bis 0,7 Gew.-% eines α-Dialkylaminocaprolactams (VI),

- 0 bis 0,7 Gew.-% Dialkylphenol (VII) und

- 0 bis 0,5 Gew.-% eines aliphatischen oder cycloaliphatischen oder araliphatischen, verzweigten oder geradkettigen $C_6$- bis $C_{18}$-Monoamins (VIII) durchgeführt wird, wobei sich die Mengen der Komponenten (Ia/b) und (II) sowie (III) bis (VIII) zu 100 Gew.-% ergänzen, neben den Komponenten (Ia/b) und (II) mindestens eine der Komponenten (IV) bis (VI) enthalten ist und die Komponenten (II) bis (VIII) über Amidbindungen an die Polymerkette gebunden

sind, so daß für das Polyamid 6 im verarbeitungsfertigen Zustand, das heißt nach Extraktion und Trocknung

- die Konzentration der primären Aminoendgruppen ($-NH_2$) höchstens 34 meq/kg,
- die Gesamtkonzentration der aus den Komponenten (IV) bis (VI) stammenden sekundären und tertiären Aminogruppen wenigstens 4 meq/kg und
- das Produkt aus der $NH_2$- und Carboxylendgruppenkonzentration ($[NH_2]\cdot[COOH]$) höchstens 2000 $(meq/kg)^2$ beträgt.

Das Dialkylphenol (VII) ist ein in 4-Stellung zur OH-Gruppe funktionalisiertes 2,6-Dialkylphenol der folgenden Formel,

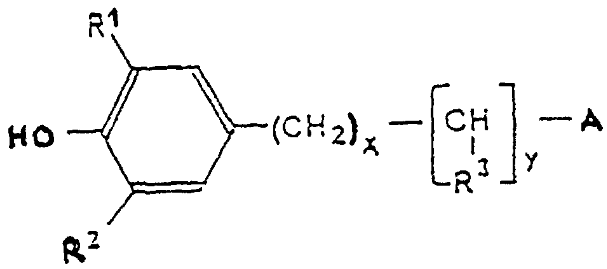

worin $R^1$ und $R^2$ gleiche oder verschiedene Alkylreste mit 1 bis 6 C-Atomen sind, $R^3$ entweder ein Wasserstoffatom oder eine Methylgruppe ist, die funktionelle Gruppe A entweder eine freie Carboxylgruppe oder eine mit $C_1$-$C_4$-Alkoholen veresterte Carboxylgruppe oder eine primäre Aminogruppe darstellt, für x und y im Fall der Aminogruppe die Wertekombinationen (x = 2/y = 1); (x = 2/y = 0); (x = 1/y = 0) und (x = 0/y = 1) möglich sind und im Fall der freien oder veresterten Carboxylgruppen x und y zusätzlich jeweils 0 sein können.

Ferner betrifft die Erfindung Polyamid 6, dadurch gekennzeichnet, daß es im wesentlichen aus Caprolactam (Ia) oder ε-Aminocapronsäure (Ib),

- 0,05 bis 0,7 Gew.-% Monocarbonsäure (II),
- 0 bis 0,7 Gew.-% Dicarbonsäure (III)
- 0 bis 0,7 Gew.-% 4-Amino-2,2,6,6-tetraalkylpiperidin (IV),
- 0 bis 0,5 Gew.-% eines aliphatischen oder cycloaliphatischen Diamins (V), welches eine primäre und eine tertiäre Aminogruppe trägt,
- 0 bis 0,7 Gew.-% eines α-Dialkylaminocaprolactams (VI),
- 0 bis 0,7 Gew.-% Dialkylphenol (VII) und
- 0 bis 0,5 Gew.-% eines aliphatischen oder cycloaliphatischen oder araliphatischen, verzweigten oder geradkettigen $C_6$- bis $C_{18}$-Monoamins (VIII)

zugänglich ist, wobei sich die Mengen der Komponenten (Ia/b) und (II) sowie (III) bis (VIII) zu 100 Gew.-% ergänzen, neben den Komponenten (Ia/b) und (II) mindestens eine der Komponenten (IV) bis (VI) enthalten ist und die Komponenten (II) bis (VIII) über Amidbindungen an die Polymerkette gebunden sind, so daß für das Polyamid 6 im verarbeitungsfertigen Zustand, das heißt nach Extraktion und Trocknung

- die Konzentration der primären Aminoendgruppen ($-NH_2$) höchstens 34 meq/kg,
- die Gesamtkonzentration der aus den Komponenten (IV) bis (VI) stammenden sekundären und tertiären Aminogruppen wenigstens 4 meq/kg und
- das Produkt aus der $NH_2$- und Carboxylendgruppenkonzentration ($[NH_2]\cdot[COOH]$) höchstens 2000 $(meq/kg)^2$ be-

trägt.

Schließlich betrifft die Erfindung Polyamid 6 zur Herstellung von Fäden, insbesondere schnellgesponnenen Fäden.

Der vorteilhafte Effekt, der von den Komponenten (II) bis (VIII) und der Einhaltung der Randbedingungen bezüglich der Konzentration der primären Aminoendgruppen, der Gesamtkonzentration der sekundären und tertiären Aminogruppen und des Produktes $[NH_2]\cdot[COOH]$ auf die Spinnsicherheit beim Schnellspinnen von Polyamid 6 ausgeht, ist neu und gemessen am Stand der Technik völlig unerwartet. Offenbar stellen die drei letztgenannten Größen übergeordnete, für das Schnellspinnen von Polyamid 6 entscheidende Faktoren dar.

Diese drei Größen lassen sich aus den Mengen der einzelnen Komponenten und den Polymerisations- bzw. Polykondensationsbedingungen, d.h. Temperatur der reagierenden Schmelze, Wasserdampfdruck in der Gasphase über der Schmelze und Wassergehalt der Schmelze unter Zugrundelegung der bekannten thermodynamischen Daten (vor allem der Temperaturabhängigkeit des Polykondensationsgleichgewichts) für Polyamid 6 berechnen. Kinetische Rechnungen erübrigen sich im allgemeinen ganz, da bei jedem kontinuierlichen oder chargenweisen Polyamid 6-Herstellungsprozeß in bezug auf den Monomerumsatz und den Polymerisationsgrad annähernd die Gleichgewichtslage erreicht wird. Zur Durchführung dieser Rechnungen sei der Fachmann verwiesen auf Ramesh et al. in Polymer, 1993, Vol. 34, No. 8, S. 1716 ff., sowie Jacobs und Schweigman in Proc. $V^{th}$ European/$6^{th}$ International Symposium on Chem. Rea. Engng., Amsterdam 1972: "Mathematical model for the Polymerization of Caprolactam to Nylon-6", S. B7-11 und ferner Giorsi/Haynes in J. Poly. Sci., Part A-1, Vol. 8, 1970, S. 351 ff.

Als Monocarbonsäuren (II) können geradkettige oder verzweigte aliphatische oder cycloaliphatische sowie aromatische Monocarbonsäuren mit 2 bis 18 Kohlenstoffatomen verwendet werden.

Besonders bevorzugte Monocarbonsäuren sind Essigsäure, Propionsäure, 2-Ethylhexansäure, Laurinsäure, Stearinsäure und Benzoesäure.

Als Dicarbonsäuren (III) können geradkettige oder verzweigte aliphatische oder cycloaliphatische, auch stickstoffhaltige Dicarbonsäuren mit 6 bis 36 Kohlenstoffatomen genauso gut verwendet werden wie substituierte oder unsubstituierte aromatische Dicarbonsäuren mit 8 bis 18 Kohlenstoffatomen. Von den beiden Untergruppen der Dicarbonsäuren sind Adipinsäure, Azelainsäure, Sebazinsäure, Dodecandisäure, die Trimethyl-adipinsäuren und cis- und/oder trans-Cyclohexan-1,4-dicarbonsäure bzw. Terephthalsäure, Isophthalsäure, Naphthalin-1,6-dicarbonsäure und Diphenyl-4,4-dicarbonsäure besonders bevorzugt.

Als 4-Amino-2,2,6,6-tetraalkylpiperidin (IV) wird besonders bevorzugt 4-Amino-2,2,6,6-tetramethylpiperidin verwendet.

Als Diamine (V), die eine primäre und eine tertiäre Aminogruppe tragen, werden besonders bevorzugt diejenigen aus der Gruppe, bestehend aus 3-(Dialkylamino)-1-propylamin, 2-Dialkylamino-1-ethylamin, Piperidino- und Pyrrolidinoalkylaminen sowie 4-Amino-1,2,2,6,6-pentaalkylpiperidin verwendet.

Als a-Dialkylaminocaprolactam (VI) wird besonders bevorzugt $\alpha$-Dimethylaminocaprolactam verwendet.

Als Dialkylphenole (VII) werden die oben spezifizierten, in 4-Stellung zur OH-Gruppe funktionalisierten 2,6-Dialkylphenole verwendet.

Als aliphatische oder cycloaliphatische oder araliphatische, verzweigte oder geradkettige $C_6$- bis $C_{18}$-Monoamine (VIII) werden bevorzugt primäre aliphatische Monoamine mit 8 bis 18 C-Atomen sowie Phenylmethylamin (Benzylamin) verwendet.

Die nach dem erfindungsgemäßen Verfahren zugänglichen Polyamide können grundsätzlich in chargenweise oder kontinuierlich arbeitende Reaktoren durch Polymerisation oder Polykondensation hergestellt werden.

Die Komponenten (II) bis (VIII) können an geeigneter Stelle in den jeweiligen Herstellprozeß eingebracht werden, wobei die Carbonsäure (II, III und ggf. VII) und die Amine (IV, V, VI, VIII und ggf. VII) in reiner Form oder gelöst (Lösungsmittel: Wasser, Caprolactam), zugegeben werden können. Die Zugabe dieser Komponenten ist meist unproblematisch und kann gemeinsam, getrennt bzw. nacheinander, vor oder während der Polymerisation bzw. Polykondensation erfolgen.

Dem nach dem erfindungsgemäßen Verfahren zugänglichen Polyamid 6 können die üblichen Mattierungsmittel auf Titandioxid-Basis vor oder während der Polymerisation bzw. Polykondensation zugesetzt werden.

Die Herstellung des erfindungsgemäßen PA 6 erfolgt nach kontinuierlichen oder chargenweisen Verfahren, wie sie seit langem bekannt sind. Bei den kontinuierlichen Verfahren zur Herstellung von Polyamid 6 ist zwischen ein-, zwei- und mehrstufigen Verfahren, offenen oder geschlossenen Rohrreaktoren (VK-Rohren) zu unterscheiden.

Die Entfernung von nicht umgesetztem Caprolactam sowie Oligomeren aus dem Polymerisat erfolgt auf bekannte Weise durch Heißwasserextraktion von Granulat, entweder kontinuierlich nach dem Gegenstromprinzip oder chargenweise. Die Extraktion kann auch durch Behandlung der Polymerschmelze in Dünnschichtverdampfern oder Zwei- bzw. Mehrschneckenextrudern unter vermindertem Druck erfolgen, wodurch ebenfalls eine weitgehende Entmonomerisierung erreicht wird.

Die nachfolgenden Beispiele erläutern die Erfindung.

1. Polymerherstellung

Die Herstellung des erfindungsgemäßen Polyamid 6 der betreffenden Vergleichsbeispiele erfolgte im Fall von Beispiel 1 chargenweise in einem 14 1-Autoklaven. Zu diesem Zweck wurden jeweils 8 kg flüssiges Caprolactam unter 100 °C mit 80 g ε-Aminocapronsäure, 160 ml Wasser und den übrigen in der Tabelle 1 angegebenen Komponenten in einem rührbaren, mit Stickstoff inertisierbaren Vorlagegefäß vermischt und die homogene Mischung anschließend in den genannten Autoklaven überführt und dort unter inerten Bedingungen ($N_2$) polymerisiert. Bei der Polymerisation wurden einheitlich etwa die folgenden Bedingungen eingehalten.

| Stufe 1 (Druckphase): | |
|---|---|
| Produkttemperatur | 260 °C |
| Druck | 3,5 bar |
| Dauer | 4,5 Stunden |

| Stufe 2 (Entspannung): | |
|---|---|
| Produkttemperatur | von 260 °C auf 250 °C |
| Druck | von 3,5 bar auf ca. 1 bar |
| Dauer | wenige Minuten |

| Stufe 3 (Entgasung): | |
|---|---|
| Produkttemperatur | 250 °C |
| Druck | 1 bar |
| Inertgas | $N_2$ |
| Dauer | 30 Minuten |

Nach Beendigung der Polymerisation bzw. Polykondensation wurden die einzelnen Chargen als Polymerstränge abgepreßt, nach Durchlaufen eines Wasserbads granuliert, extrahiert und getrocknet. Die Extraktion des im Extraktor festgehaltenen Granulats erfolgte mit heißem Wasser. Die Durchflußmenge des Wassers betrug 17 l/Stunde, seine Temperatur 100 °C. Die Extraktionsdauer war 15 Stunden. Der Wasserextrakt betrug jeweils ca. 9,5 Gew.-%, bezogen auf die Menge des unextrahierten Granulats.

Die Herstellung aller übrigen Produkte (Beispiel 2 und 3 sowie Vergleichsbeispiele 1 bis 3) erfolgte in einem 1301-Rührautoklaven. Zu diesem Zweck wurden jeweils 45 kg flüssiges Caprolactam bei 90°C zusammen mit 7 l Wasser mit den in der Tabelle 1 angegebenen Mengen der übrigen Komponenten in einem rührbaren mit Stickstoff inertisierten Vorlagegefäß vermischt und die homogene Mischung anschließend in den genannten Autoklaven überführt und dort unter inerten Bedingungen ($N_2$) polymerisiert. Bei der Polymerisation wurden einheitlich etwa die folgenden Bedingungen eingehalten:

| | | |
|---|---|---|
| Stufe 1 (Druckphase): | PRODUKTTEMPERATUR:<br>Druck<br>Dauer | 270°C<br>19 bar<br>3 Stunden |

| | | |
|---|---|---|
| Stufe 2 (Entspannung): | PRODUKTTEMPERATUR:<br>Druck<br>Dauer | von 270 auf 260°C<br>von 19 bar auf 1 bar<br>1,5 Stunden |

| | | |
|---|---|---|
| Stufe 3 (Entgasung): | PRODUKTTEMPERATUR:<br>Druck<br>Dauer | 260°C<br>1 bar<br>ca. 5 Stunden |

Beim Erreichen der gewünschten Viskosität wurden die einzelnen Chargen als Polymerstränge abgepreßt, nach Durchlaufen eines Wasserbands granuliert, mit Wasser extrahiert und getrocknet. Als Maß für die Viskosität der Polyamid 6-Schmelze wurde die Drehmomentanzeige des Rührwerks des Autoklaven zugrundegelegt.

Je 40 kg jeder Charge wurden 16 h bei 80°C mit 2400 l Frischwasser pro Stunde extrahiert. Die Trocknung erfolgte bei 110°C über 24 h im Vakuum.

Bei der Berechnung der Konzentration primärer Aminoendgruppen und der Konzentration der übrigen Aminogruppen aus der gemessenen Gesamtaminogruppenkonzentration von extrahiertem und getrocknetem Granulat wurde für alle chargenweise hergestellten Produkte der oben angegebene Wasserextrakt zugrunde gelegt.

Die Lösungsviskosität von extrahierten und getrockneten bzw. zusätzlich nachkondensiertem Polyamid-6 wurde in 1,0 Gew.-%iger Lösung in Schwefelsäure (96 %ig) bei 20 °C bestimmt.

Die Bestimmung der Endgruppenkonzentrationen erfolgte mittels acidimetrischer Titration. Die Aminoendgruppen wurden in m-Kresol/iso-Propanol-2:1 (Gew.-Teile) als Lösungsmittel mit 0,1-normaler ethanolischer Perchlorsäure titriert. Die Titration der Carboxylendgruppen erfolgte in Benzylalkohol als Lösungsmittel mit 0,1-normalem benzylalkoholischem Kaliumhydroxid.

Die in den Beispielen verwendeten Abkürzungen haben folgende Bedeutung:

| | |
|---|---|
| LC-6 | Caprolactam |
| BA | Benzoesäure |
| TPA | Terephthalsäure |
| ACS | ε-Aminocapronsäure |
| TAD | Triacetondiamin = 4-Amino-2,2,6,6-tetramethylpiperidin |
| DEAPA | 3-Diethylamino-1-propylamin |
| DBHPP | 3-(3,5-Di-tert-butyl-4-hydroxyphenyl)-propionsäure |
| [C] | Carboxylendgruppenkonzentration in meq/kg |
| [A] | Aminoendgruppenkonzentration in meq/kg |
| [$NH_2$] | Konzentration primärer Aminoendgruppen in meq/kg |
| [$A_{5,t}$] | Konzentration sekundärer bzw. tertiärer Aminoendgruppen aus der Komponente (V) bzw. (VI) in meq/kg |
| RV | Relative Lösungsviskosität in 1,0 Gew.-%iger Lösung in Schwefelsäure (96 %ig) bei 20 °C |

Bezugsquellen von Rohstoffen:

| | |
|---|---|
| TAD | Hüls AG; Marl (Deutschland) |
| DEAPA | Hoechst Werk Ruhrchemie; Oberhausen (Deutschland) |
| DBHPP | Ciba Geigy AG; Basel (Schweiz) |

Tabelle 1:

Charakterisierung des erfindungsgemäßen PA 6 und der Produkte des Standes der Technik (extrahiert und getrocknet bwz. nachkondensiert)

| | ROHSTOFFE (Gew.-%) | | | | | | | ANALYSEN | | | | | |
|---|---|---|---|---|---|---|---|---|---|---|---|---|---|
| BEISPIEL | LC-6 (Ia) | ACS (Ib) | BA (II) | TPA (II) | TAD (IV) | DEAPA (V) | DBHPP (VII) | RV | [A] | [C] | $[NH_2]$ | $[C]\cdot[NH_2]$ | $[A_{5,1}]$ |
| Vgl. 1 | 98,43 | 1 | 0,18 | - | - | 0,19 | 0,2 | 2,37 | 57 | 52 | 40,4 | 2100 | 16,6 |
| Vgl. 2 | 98,54 | 1 | 0,27 | - | - | 0,19 | - | 2,38 | 56 | 52 | 39,4 | 2050 | 16,6 |
| Vgl. 3 | 98,26 | 1 | 0,135 | 0,2 | 0,405 | - | - | 2,38 | 71 | 50 | 42,3 | 2115 | 28,7 |
| 1 | 98,42 | 1 | 0,3 | - | - | 0,08 | 0,2 | 2,39 | 37 | 59 | 30,3 | 1788 | 6,7 |
| 2 | 98,53 | 1 | 0,39 | - | - | 0,08 | - | 2,41 | 36 | 57 | 29,3 | 1680 | 6,7 |
| 3 | 98,31 | 1 | 0,22 | 0,2 | 0,27 | - | - | 2,38 | 46 | 66 | 29,4 | 1940 | 15,6 |

2. Spinnversuche:

Das vorgetrocknete Granulat wurde mit einem Einschneckenextruder des Typs 3E4... der Firma Barmag

(Remscheid/Deutschland) aufgeschmolzen. Die PA 6-Schmelzen ($T_{SCHMELZ}$ = 267 °C) wurden über eine Schmelzeleitung mit Hilfe einer Planetenradpumpe dem Spinnkopf zugeführt. Die Produkte wurden zu: Garn mit dem Titer 77/24 dtex/f versponnen. Die Fadenabkühlung erfolgte mittels Querstromanblasung. Die Wicklergeschwindigkeit betrug 5000 bzw. 5750 m/min. Zur Beurteilung der Spinnsicherheit der einzelnen Produkte wurden die Schärfehler pro 10 km gemessen. Die betreffenden Ergebnisse sind in Tabelle 2 zusammengestellt. Um zwischen den einzelnen Polymeren eindeutig differenzieren zu können, wurde die Detektionsschwelle bei der Messung der Schärfehler extrem niedrig eingestellt.

In der letzten Spalte von Tabelle 2 wurde die Schaltschwelle (S.schw.) etwas erhöht, dafür wurden aber die Schärfehler auf 50 km bezogen.

Tabelle 2:

| Charakterisierung der Produkte bezüglich ihrer Spinnbarkeit | | | |
|---|---|---|---|
| Beispiel | Wickler [m/min] | Schärfehler [pro 10000 m] S.schw.: 0,6% | Schärfehler [pro 50000 m] S.schw.: 1,0% |
| Vgl. 1 | 5000 | 9 | 18 |
| " | 5750 | 17 | 24 |
| Vgl. 2 | 5000 | 10 | 15 |
| " | 5750 | 14 | 19 |
| Vgl. 3 | 5750 | 7 | 12 |
| 1 | 5000 | 3 | 9 |
| " | 5750 | 5 | 13 |
| 2 | 5000 | 2 | 10 |
| " | 5750 | 3 | 15 |
| 3 | 5750 | 3 | 12 |

## Patentansprüche

1. Verfahren zur Herstellung von Polyamid 6 durch hydrolytische Polymerisation von Caprolactam (Ia) oder Polykondensation von ε-Aminocapronsäure (Ib), **dadurch gekennzeichnet, daß** die Polymerisation bzw. Polykondensation in Gegenwart von

   0,05 bis 0,7 Gew.-% Monocarbonsäure (II),

   0 bis 0,7 Gew.-% Dicarbonsäure (III)

   0 bis 0,7 Gew.-% 4-Amino-2,2,6,6-tetraalkylpiperidin (IV),

   0 bis 0,5 Gew.-% eines aliphatischen oder cyclophatischen Diamins, welches eine (V) primäre und eine tertiäre Aminogruppe trägt,

   0 bis 0,7 Gew.-% eines α-Dialkylaminocaprolactams (VI),

   0 bis 0,7 Gew.-% Dialkylphenol (VII) und

   0 bis 0,5 Gew.-% eines aliphatischen oder cycloaliphatischen oder araliphatischen, verzweigten oder geradkettigen $C_6$- bis $C_{18}$- Monoamins (VIII)

   durchgeführt wird, wobei sich die Mengen der Komponenten (Ia/b) und (II) sowie (III) bis (VIII) zu 100 Gew.-% ergänzen, neben den Komponenten (Ia/b) und (II) mindestens eine der Komponenten (IV) bis (VI) enthalten ist und die Komponenten (II) bis (VIII) über Amidbindungen an die Polymerkette gebunden sind, so daß für das Polyamid 6 im verarbeitungsfertigen Zustand, das heißt nach Extraktion und Trocknung

   die Konzentration der primären Aminoendgruppen ($-NH_2$) höchstens 34 meq/kg,

die Gesamtkonzentration der aus den Komponenten (IV) bis (VI) stammenden sekundären und tertiären Aminogruppen wenigstens 4 meq/kg und

das Produkt aus der $NH_2$- und Carboxylendgruppenkonzentration ($[NH_2] \cdot [COOH]$) höchstens 2000 $(meq/kg)^2$ beträgt.

2. Verfahren gemäß Anspruch 1, **dadurch gekennzeichnet, daß** man als Dialkylphenol (VII) ein in 4-Stellung zur OH-Gruppe funktionalisiertes 2,6-Dialkylphenol der folgenden Formel

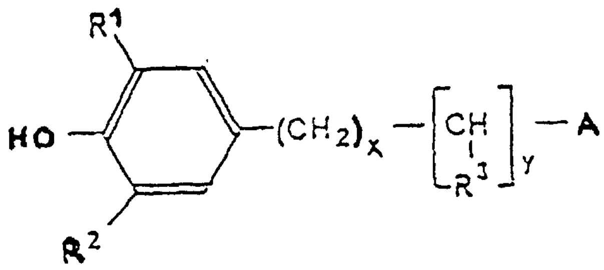

einsetzt, worin $R^1$ und $R^2$ gleiche oder verschiedene Alkylreste mit 1 bis 6 C-Atomen sind, $R^3$ entweder ein Wasserstoffatom oder eine Methylgruppe ist, die funktionelle Gruppe A entweder eine freie Carboxylgruppe oder eine mit $C_1$-$C_4$-Alkoholen veresterte Carboxylgruppe oder eine primäre Aminogruppe darstellt, für x und y im Fall der Aminogruppe die Wertekombinationen (x = 2/y = 1); (x = 2/y = 0); (x = 1/y = 0) und (x = 0/y = 1) möglich sind und im Fall der freien oder veresterten Carboxylgruppe x und y zusätzlich jeweils 0 sein können.

3. Verfahren gemäß Anspruch 2, **dadurch gekennzeichnet, daß** $R^1 = R^2 = C(CH_3)_3$(t-Butyl) oder $R^1$ = t-Butyl und $R^2$ = Methyl ist.

4. Verfahren gemäß einem der vorhergehenden Ansprüche, **dadurch gekennzeichnet, daß** als Komponente (IV) 4-Amino-2,2,6,6-tetramethylpiperidin verwendet wird.

5. Verfahren gemäß einem der Ansprüche 2 oder 3, **dadurch gekennzeichnet, daß** als Komponente (VII) eine Verbindung, ausgewählt aus der Gruppe der Verbindungen mit A = COOH oder A = $COOCH_3$ oder A = $NH_2$, $R^3$ = H sowie x = 2 und y = 1, verwendet wird.

6. Polyamid 6, **dadurch gekennzeichnet, daß** es im wesentlichen aus Caprolactam (Ia) oder ε-Aminocapronsäure (Ib),

0,05 bis 0,7 Gew.-% Monocarbonsäure (II),

0 bis 0,7 Gew.-% Dicarbonsäure (III)

0 bis 0,7 Gew.-% 4-Amino-2,2,6,6-tetraalkylpiperidin (IV),

0 bis 0,5 Gew.-% eines aliphatischen oder cyclophatischen Diamins (V), welches eine primäre und eine tertiäre Aminogruppe trägt,

0 bis 0,7 Gew.-% eines α-Dialkylaminocaprolactams (VI),

0 bis 0,7 Gew.-% Dialkylphenol (VII) und

0 bis 0,5 Gew.-% eines aliphatischen oder cycloaliphatischen oder araliphatischen, verzweigten oder geradkettigen $C_6$- bis $C_{18}$-Monoamins (VIII)

zugänglich ist, wobei sich die Mengen der Komponenten (Ia/b) und (II) sowie (III) bis (VIII) zu 100 Gew.-% ergänzen, neben den Komponenten (Ia/b) und (II) mindestens eine der Komponenten (IV) bis (VI) enthalten ist und die Komponenten (II) bis (VIII) über Amidbindungen an die Polymerkette gebunden sind, so daß für

das Polyamid 6 im verarbeitungsfertigen Zustand, das heißt nach Extraktion und Trocknung die Konzentration der primären Aminoendgruppen ($-NH_2$) höchstens 34 meq/kg,

die Gesamtkonzentration der aus den Komponenten (IV) bis (VI) stammenden sekundären und tertiären Aminogruppen wenigstens 4 meq/kg und

das Produkt aus der NH2- und Carboxylendgruppenkonzentration ($[NH_2] \cdot [COOH]$) höchstens 2000 $(meq/kg)^2$ beträgt.

**7.** Polyamid 6 gemäß einem der Ansprüche 1 bis 6 zur Herstellung von Fäden.

**8.** Verwendung des Polyamid 6 gemäß den Ansprüchen 1 bis 6 als Fäden.

**9.** Fäden, erhältlich durch die Verwendung des Polyamid 6 gemäß den Ansprüchen 6 und 7.

**Claims**

**1.** A process for preparing polyamide 6 by hydrolytic polymerization of caprolactam (Ia) or polycondensation of ε-aminocaproic acid (Ib), **characterized in that** the polymerization or polycondensation is performed in the presence of

0.05 to 0.7 wt.-% of monocarboxylic acid (II),
0 to 0.7 wt.-% of dicarboxylic acid (III),
0 to 0.7 wt.-% of 4-amino-2,2,6,6-tetraalkyl-piperidine (IV),
0 to 0.5 wt.-% of an aliphatic or cycloaliphatic diamine (V), carrying a primary and a tertiary amino group,
0 to 0.7 wt.-% of an α-dialkylamino caprolactam (VI),
0 to 0.7 wt.-% of dialkyl-phenol (VII) and
0 to 0.5 wt.-% of an aliphatic or cycloaliphatic or araliphatic, branched or straight-chain $C_6$ to $C_{18}$ monoamine (VIII)

wherein the amounts of the components (Ia/b) and (II), as well as (III) to (VIII) make up 100 wt.-%, at least one of the components (IV) through (VI) is comprised in addition to the components (Ia/b) and (II), and the components (II) through (VIII) are bonded to the polymer chain by amide bonds, so that for the polyamide 6 in processable condition, i.e., after extraction and drying

the concentration of the primary amino end groups ($-NH_2$) is maximally 34 meq/kg,

the total concentration of the secondary and tertiary amino groups deriving from the components (IV) through (VI) is at least 4 meq/kg, and the product of the $NH_2$ and carboxyl end group concentration ($[NH_2]\cdot[COOH]$) is maximally 2000 $(meq/kg)^2$.

**2.** The process according to claim 1, **characterized in that** a 2,6-dialkyl-phenol functionalized in 4-position to the OH group and having the following formula

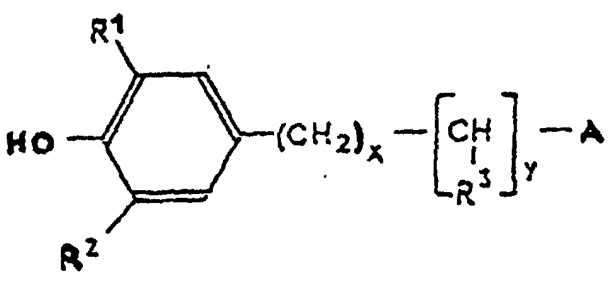

is used as dialkyl-phenol (VII)

wherein $R^1$ and $R^2$ are identical or different alkyl radicals having 1 to 6 C-atoms, $R^3$ is either a hydrogen atom or a methyl group, the functional group A is either a free carboxyl group or a carboxyl group esterified with $C_1$-$C_4$-alcohols or represents a primary amino group, and in the case of the amino group the value combinations (x = 2/y = 1); (x = 2/y = 0); (x = 1/y = 0) and (x = 0/y = 1) are possible for x and y, and in the case of the free or esterified carboxyl groups x and y can additionally each be 0.

3. The process according to claim 2, **characterized in that** $R^1 = R^2 = C(CH_3)_3$(t-butyl) or $R^1$ = t-butyl and $R^2$ = methyl.

4. The process according to one of the preceeding claims **characterized in that** 4-amino-2,2,6,6-tetramethyl-piperidine is used as component (IV).

5. The process according to one of the claims 2 or 3, **characterized in that** a compound selected from the group of compounds with A = COOH or A = $COOCH_3$ or A = $NH_2$, $R^3$=H, as well as x = 2 and y = 1 is used as component (VII).

6. Polyamide 6, **characterized in that** it is substantially accessible from caprolactam (Ia) or ε-aminocaproic acid (Ib),
0.05 to 0.7 wt.-% of monocarboxylic acid (II),
0 to 0.7 wt.-% of dicarboxylic acid (III)
0 to 0.7 wt.-% of 4-amino-2,2,6,6-tetraalkyl-piperidine (IV),
0 to 0.5 wt.-% of an aliphatic or cycloaliphatic diamine (V) carrying a primary and a tertiary amino group,
0 to 0.7 wt.-% of an α-dialkylamino caprolactam (VI),
0 to 0.7 wt.-% of dialkyl-phenol (VII), and
0 to 0.5 wt.-% of an aliphatic or cycloaliphatic or araliphatic, branched or straight-chain $C_6$ to $C_{18}$ monoamine (VIII)
wherein the amounts of the components (Ia/b) and (II), as well as (III) to (VIII) make up 100 wt.-%, at least one of the components (IV) through (VI) is comprised in addition to the components (Ia/b) and (II), and the components (II) through (VIII) are bonded to the polymer chain by amide bonds, so that for the polyamide 6 in processable condition, i.e., after extraction and drying:

the concentration of the primary amino end groups ($-NH_2$) is maximally 34 meq/kg,
the total concentration of the secondary and tertiary amino groups deriving from the components (IV) through (VI) is at least 4 meq/kg, and
the product of the $NH_2$ and carboxyl end group concentration ($[NH_2]\cdot[COOH]$) is maximally 2000 $(meq/kg)^2$.

7. Polyamide 6 according to one of the claims 1 through 6 for the production of filament yarns.

8. Use of the polyamide 6 according to the claims 1 through 6 as filament yarns.

9. Filament yarns, obtainable by the use of polyamide 6 according to the claims 6 and 7.

## Revendications

1. Procédé de préparation de polyamide 6 au moyen d'une polymérisation par hydrolyse du caprolactame (Ia) ou d'une polycondensation de l'acide ε-aminocaproïque (Ib), **caractérisé en ce que** la polymérisation ou la polycondensation est réalisée en présence de
0,05 à 0,7% en poids d'un acide monocarboxylique (II),
0 à 0,7% en poids d'un acide dicarboxylique (III),
0 à 0,07% en poids d'une 4-amino-2,2-6,6-tétraalkyl-pipéridine (IV),
0 à 0,5% en poids d'une diamine aliphatique ou cycloaliphatique qui porte un groupe amine primaire (V) et un groupe amine tertiaire,
0 à 0,7% en poids d'un α-dialkylaminocaprolactame (VI),
0 à 0,7% en poids d'un dialkylphénol (VII) et
0 à 0,5% en poids d'une monoamine (VIII) aliphatique ou cycloaliphatique ou araliphatique, à chaîne droite ou ramifiée, en $C_6$ à $C_{13}$, dans lequel les quantités des composants (Ia/b) et (II) ainsi que (III) jusqu'à (VIII) sont supplémentés jusqu'à 100% en poids, outre les composants (Ia/b) et (II), au moins un des composants (IV) à (VI) y est contenu et les composants (II) à (VIII) sont liés à la chaîne polymère par des liaisons amide, de sorte que pour le polyamide dans l'état prêt au traitement, à savoir après extraction et séchage, la concentration des groupes terminaux amine primaire ($-NH_2$) est au maximum de 34 méq./kg, la concentration totale des groupes amine secondaire et amine tertiaire issus des composants (IV à VI) est au moins de 4 méq./kg et le produit de la concentration en groupes $NH_2$ et de la concentration en groupes terminaux carboxyle ($[NH_2]$ . $[COOH]$) est au maximum de 2 000 $(méq./kg)^2$.

2. Procédé selon la revendication 1, **caractérisé en ce que** l'on met en oeuvre en tant que dialkylphénol (VII), un 2,6-dialkylphénol fonctionnalisé dans la position IV par rapport au groupe OH, de formule suivante

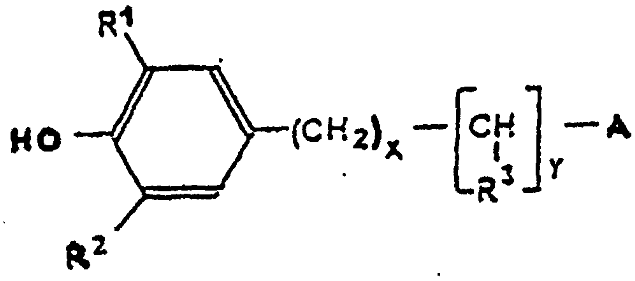

dans laquelle $R^1$ et $R^2$ représentent des résidus alkyle identiques ou différents ayant 1 à 6 atomes de carbone, $R^3$ représente un atome d'hydrogène ou un groupe méthyle, le groupe fonctionnel A représente un groupe carboxyle libre ou un groupe carboxyle estérifié par des alcools en $C_1$ à $C_4$, ou bien un groupe amine primaire, dans le cas du groupe amine, les combinaisons de valeurs (x = 2/y = 1) ; (x = 2/y = 0) ; (x = 1/y = 0) et -x = 0/y = 1) sont possibles pour x et y, et dans le cas du groupe carboxyle libre ou estérifié, x et y peuvent être en outre chacun égal à 0.

**3.** Procédé selon la revendication 2, **caractérisé en ce que**, $R^1 = R^2 = C(CH_3)_3$(t-butyle) ou bien $R^1$ = t-butyle et $R^2$ = méthyle.

**4.** Procédé selon l'une quelconque des revendications précédentes, **caractérisé en ce que** la 4-amino-2,2,6,6-tétraméthylpipéridine est employée en tant que composant (IV) .

**5.** Procédé selon l'une quelconque des revendications 2 ou 3, **caractérisé en ce qu'**un composé, choisi dans le groupe des composés ayant A = COOH ou A = $COOCH_3$ ou A = $NH_2$, $R^3$ = H ainsi que x = 2 et y = 1, est employé en tant que composant (VII).

**6.** Polyamide 6, **caractérisé en ce qu'**il est accessible essentiellement en partant du caprolactame (Ia) ou de l'acide ε-aminocaproïque (Ib),
de 0,05 à 0,7% en poids d'un acide monocarboxylique (II),
de 0 à 0,7% en poids d'un acide dicarboxylique (III),
de 0 à 0,07% en poids d'une 4-amino-2,2-6,6-tétraalkyl-pipéridine (IV),
0 à 0,5% en poids d'une diamine aliphatique ou cycloaliphatique qui porte un groupe amine primaire (V) et un groupe amine tertiaire,
0 à 0,7% en poids d'un α-dialkylaminocaprolactame (VI),
0 à 0,7% en poids d'un dialkylphénol (VII) et
0 à 0,5% en poids d'une monoamine (VIII) aliphatique ou cycloaliphatique ou araliphatique, à chaîne droite ou ramifiée, en $C_6$ à $C_{13}$ dans lequel les quantités des composants (Ia/b) et (II) ainsi que (III) jusqu'à (VIII) sont supplémentés jusqu'à 100% en poids, outre les composants (Ia/b) et (II), au moins un des composants (IV) à (VI) y est contenu et les composants (II) à (VIII) sont liés à la chaîne polymère par des liaisons amide, de sorte que pour le polyamide dans l'état prêt au traitement, à savoir après extraction et séchage, la concentration des groupes terminaux amine primaire ($-NH_2$) est au maximum de 34 méq./kg, la concentration totale des groupes amine secondaire et amine tertiaire issus des composants (IV à VI) est au moins de 4 méq./kg et le produit de la concentration en groupes $NH_2$ et de la concentration en groupes terminaux carboxyle ($[NH_2].[COOH]$) est au maximum de 2000 $(méq./kg)^2$.

**7.** Polyamide selon l'une quelconque des revendications 1 à 6, pour fabriquer des fils.

**8.** Utilisation du polyamide 6, selon les revendications 1 à 6, sous forme de fils.

**9.** Fils que l'on peut obtenir en employant le polyamide 6, selon les revendications 6 et 7.